# EUROPEAN PATENT SPECIFICATION

(11) **EP 1 877 292 B1**
(45) Date of publication and mention of the grant of the patent: **09.09.2009**
(21) Application number: 06723757.8
(22) Date of filing: 27.03.2006
(51) Int. Cl.: B62B 7/06

(54) **FOLDING FRAME FOR STROLLERS**
KLAPPRAHMEN FÜR KINDERWAGEN
DISPOSITIF DE PLIAGE POUR POUSSETTES

(30) Priority: 27.04.2005 IT VR20050048
(43) Date of publication of application: 16.01.2008
(73) Proprietor: L'Inglesina Baby S.p.A., 36077 Altavilla Vicentina (IT)
(72) Inventor: TOMASI, Ivan, I-36050 Sovizzo (IT); GORZA, Roberto, I-32032 Feltre (IT)
(74) Representative: Alagem Modiano, Lara S.
(86) International application number: PCT/EP2006/002780
(87) International publication number: WO 2006/114174

(56) References cited:
- GB-A- 2 145 982
- US-A1- 2004 026 896
- US-A1- 2004 227 330

## Description

### Technical Field

The present invention relates to a folding frame particularly for strollers, baby carriages and the like.

Folding frames for strollers or baby carriages are known which are constituted substantially by a lower framework, comprising two front uprights and two rear uprights, which support in a downward region respective wheels, and by two upper uprights, known in the jargon as "handle tubers", which end in an upward region with the handle or handgrip of the frame and can move, with respect to the lower framework, with a movement which has a translational component and a rotary component, in order to allow the closure or folding of the frame.

### Background Art

In a known solution, the upper uprights are associated with the lower framework by coupling with respective through sliding seats, which are provided generally at articulation bodies which mutually connect the upper ends of the front uprights and of the rear uprights.

In order to allow the upper uprights to perform, with respect to the lower framework, a translational motion with the possibility to oscillate within the through seats, such seats provide, with respect to the transverse dimension of the upper uprights, a play which increases gradually along their axis, so as to assume substantially a frustum-shaped configuration in which the flaring is generally directed upwardly.

Although this embodiment is used extensively, it suffers the drawback of considerable constructive complexity, caused mainly by difficulty in manufacturing the molds required to obtain the frustum-shaped through seats, thereby negatively affecting also the production costs.

Another drawback which can be ascribed to the solution of the background art consists in that the articulation bodies protrude laterally with respect to the upper uprights, accordingly creating an unwanted bulk, particularly when the frame is in the folded position.

Another drawback which can be observed in the background art consists in that the movement of the upper uprights in the respective through seats occurs by sliding of the upper uprights against the walls of said through seats, with friction which can make it awkward to move the frame for opening or closing it. U.S. Patent no. 2004/227330 discloses a three-wheeled jogging stroller which is easily foldable for transit or storage comprising the features of the preamble of claim 1.

### Disclosure of the Invention

The aim of the present invention is to solve the problem described above by providing a folding frame particularly for strollers, baby carriages and the like which has an extremely simplified structure with respect to currently known solutions.

Within this aim, an object of the present invention is to provide a folding frame which can assume a configuration which is extremely compact from a dimensional standpoint once it has been folded.

Another object of the invention is to provide a folding frame which can be pleasant also from a merely aesthetic standpoint.

Another object of the invention is to provide a folding frame which is easy to use and offers the greatest assurances of reliability and safety in operation.

Another object of the present invention is to provide a folding frame which, thanks to its particular constructive characteristics, is capable of achieving limited friction in the sliding of the upper uprights during the opening or closure of the frame.

Still another object of the present invention is to provide a folding frame which can be obtained with low production costs.

This aim and these and other objects, which will become better apparent hereinafter, are achieved by a folding frame particularly for strollers, baby carriages and the like, according to the invention, comprising a lower framework, provided with two front uprights and two rear uprights, which are connected, in a downward region, to respective wheels and are mutually articulated by means of connecting assemblies, and two upper uprights, which can move, with respect to said lower framework, for the passage or said frame from an extended position to a retracted position and vice versa, as claimed in claim 1.

### Brief description of the Drawings

Further characteristics and advantages of the present invention will become better apparent from the description of some preferred but not exclusive embodiments of the folding frame according to the invention, illustrated by way of non-limiting example in the accompanying drawings, wherein:

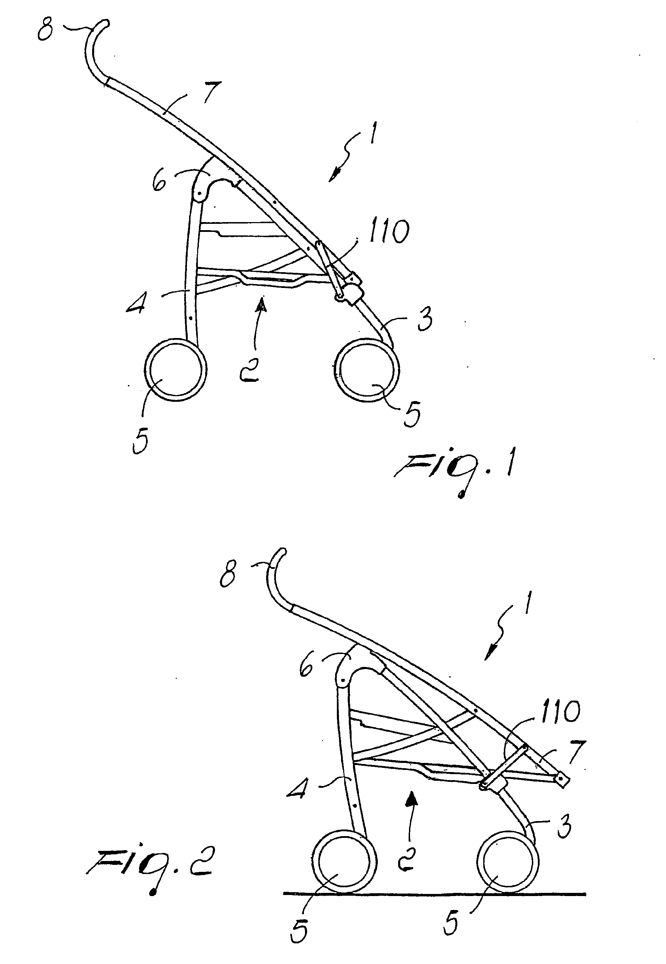

Figure 1 is a schematic side view of the frame according to the invention in the extended condition;
Figure 2 is a schematic side elevation view of the frame according to the invention in an intermediate folding step;
Figure 3 is a slightly elevated perspective view, with parts shown in cross-section, of the connecting element and the corresponding coupling seat;
Figure 4 is a slightly elevated perspective view of a different embodiment, with parts shown in cross-section in order to highlight the connecting element and the corresponding coupling seat;

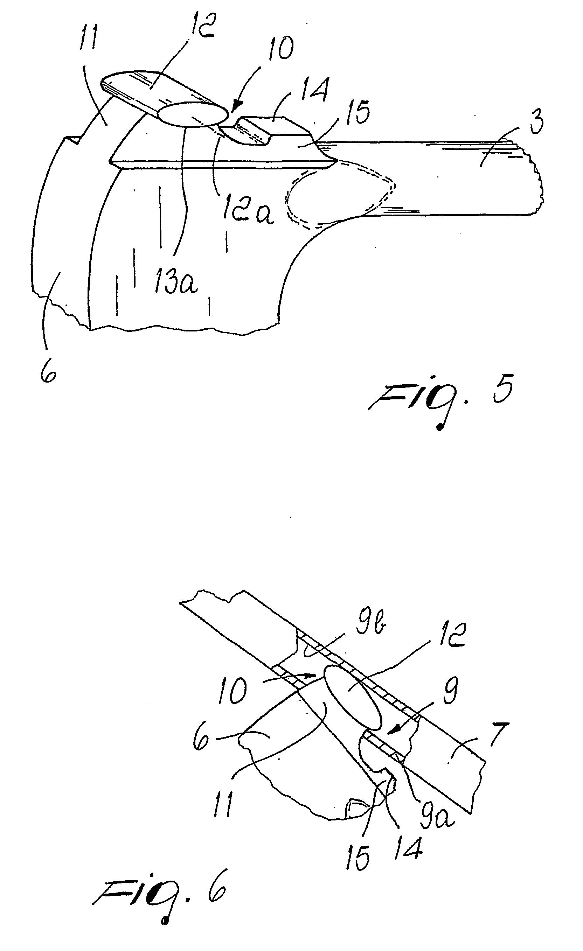

Figure 5 is a perspective view of another possible embodiment of the connecting element;
Figure 6 is a schematic and partially cutout perspective view of the connecting element according to the embodiment of Figure 5, coupled to the corresponding coupling seat formed in the respective upper upright;
Figure 7 is a partial side elevation view, with parts shown in cross-section, of another possible embodiment of the frame;
Figure 8 is a schematic top perspective view of still another embodiment of the invention.

In the exemplary embodiments that follow, individual characteristics, given in relation to specific embodiments, may actually be interchanged with other different characteristics that exist in other exemplary embodiments.

Moreover, it is noted that anything found to be already known during the patenting process is understood not to be claimed and to be the subject of a disclaimer.

### Ways of carrying out the Invention

With reference to the figures, the folding frame particularly for strollers, baby carriages and the like, according to the invention, generally designated by the reference numeral 1, comprises a lower framework 2, which has two front uprights 3 and two rear uprights 4, which are connected in a downward region to respective wheels 5.

The front uprights 3 and the rear uprights 4 are joined by interposing connecting assemblies, which are per se known and in particular are mutually articulated, at their upper ends, by means of articulation bodies 6, which are also per se known.

Two upper uprights 7 are associated with the lower framework 2 and end, in an upward region, with grip elements 8 and can move, with respect to the lower framework 2, in order to allow the frame 1 to pass from an extended position to a retracted position and vice versa.

For example, one or both of the upper uprights can be movable, with respect to the lower framework 2, with a movement which has a translational motion component and a rotary motion component, in order to cause the transition of the frame 1 from its retracted position to its extended position and vice versa.

According to the invention, on at least one of the upper uprights 7, and more preferably on both of the upper uprights 7, there is at least one coupling seat 9, which has an elongated shape and extends along at least one portion of the longitudinal extension of the corresponding upper upright 7.

The coupling seat 9 conveniently affects an intermediate portion of the corresponding upper upright 7 and is engaged by at least one connecting element 10, which is supported by the lower framework 2.

In particular, the connecting element 10 engages the coupling seat 9 of the corresponding upper upright 7 so that it is possible to slide the corresponding upper upright 7, with respect to the connecting element 10, along the direction determined by the corresponding coupling seat 9, in the transition of the frame 1 from its retracted position to its extended position and vice versa.

Advantageously, the upper uprights 7 engage, by means of the respective coupling seat 9, the corresponding connecting element 10, with the additional possibility to turn about said connecting element 10 when the frame 1 is closed or opened.

For the sake of completeness, it should be added that each upper upright 7 is conveniently connected, proximate to its lower end, to the corresponding front upright 3 by means of an articulation rocker 110 or by means of other equivalent elements.

With the structure described above, each upper upright 7, in the transition of the frame 1 from the retracted condition to the extended condition and vice versa, is capable of performing a translational motion, with respect to the lower framework 2, thanks to the coupling with the possibility to slide between the coupling seat 9 and the connecting element 10, and, at the same time is capable of rotating, again with respect to the lower framework 2, thanks to the possibility to rotate about the connecting element 10 and to the connection to the corresponding articulation rocker 110.

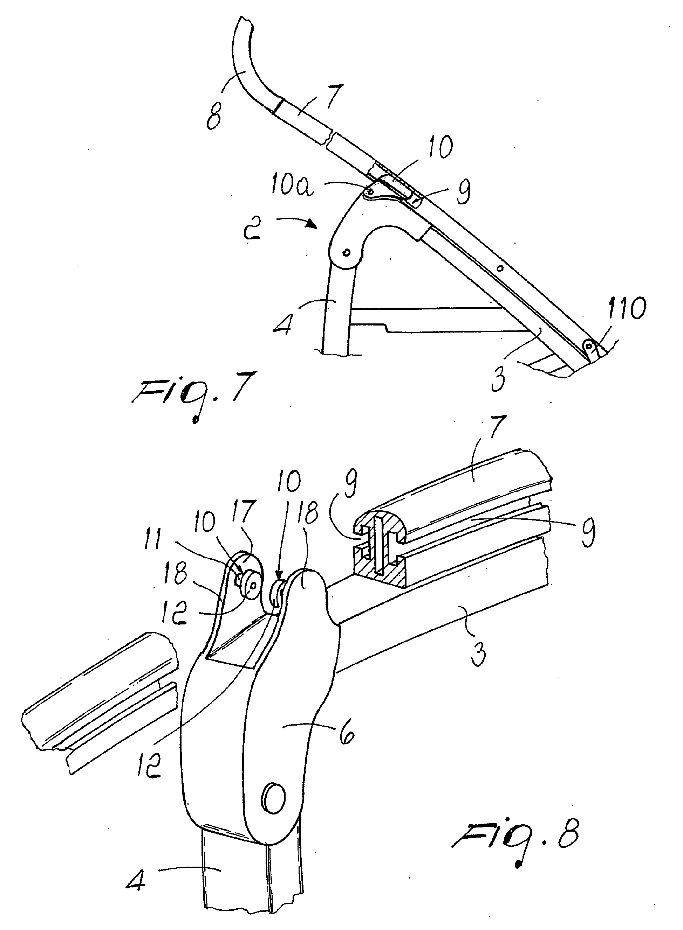

In an alternative embodiment of the invention, shown by way of example in Figure 7, the connecting element 10 engages slidingly the corresponding coupling seat 9, but the corresponding upper upright 7 cannot rotate about it, and is further pivoted about a fulcrum 10a to the lower framework 2, so that it can oscillate freely, with respect to said lower framework 2, about a pivoting axis which in practice forms a rotation axis for the respective upper upright 7 and is preferably oriented substantially at right angles to the plane which passes through the respective upper upright 7 and through the front upright 3 which is adjacent thereto. In this case, in the transition of the frame 1 from the retracted position to the extended position and vice versa, the upper uprights 7 can move, with respect to the lower framework, with a sliding motion relative to the connecting element 10 and with a rotary motion which is determined by their articulation with the respective articulation rockers 110 and by the possibility of the connecting element 10 to oscillate about its pivoting axis.

Conveniently, the connecting element 10 is constituted by a protrusion 11, which protrudes from the lower framework 2 and more preferably from the articulation body 6, which is located proximate to the corresponding upper upright 7.

The protrusion 11 is advantageously accommodated in a groove-like portion 9a, which is open outwardly and is formed by the coupling seat 9.

Conveniently, retention means are provided which are adapted to prevent the disengagement of the protrusion 11 from the groove-like portion 9a, and in particular the protrusion 11 has a wider head 12, which engages a corresponding wider portion 9b, which is formed by the coupling seat 9 and provides at least one abutment region 13 a, which faces a respective shoulder region 13b which is formed by the wider portion 9b of the coupling seat 9, laterally with respect to the groove-like portion 9a.

Advantageously, the wider head 12 of the protrusion 11 is oriented, with its longitudinal direction 12a, substantially parallel to the axis about which the corresponding upper upright 7 can rotate with respect to said wider head 12.

Conveniently, the lateral surface of the wider head 12 has, with respect to its longitudinal direction 12a, a contour with a rounded profile, so as to facilitate the oscillation of the corresponding upper upright 7 about it.

For example, the wider head 12 can have, in a transverse cross-section with respect to its longitudinal direction 12a, a substantially circular shape or, more preferably, can be substantially elliptical.

In practice, the wider head 12 is oriented, with its longitudinal direction, substantially at right angles to the plane which passes through the corresponding upper upright 7 and the front upright 3 which corresponds thereto. In general, such plane is substantially vertical.

In a possible different embodiment, advantageously, at the free end of the protrusion 11, there are friction reduction means, such as for example rolling bearings or other similar elements, which are designed to limit the sliding friction between the connecting element 10 and the respective upper upright 7.

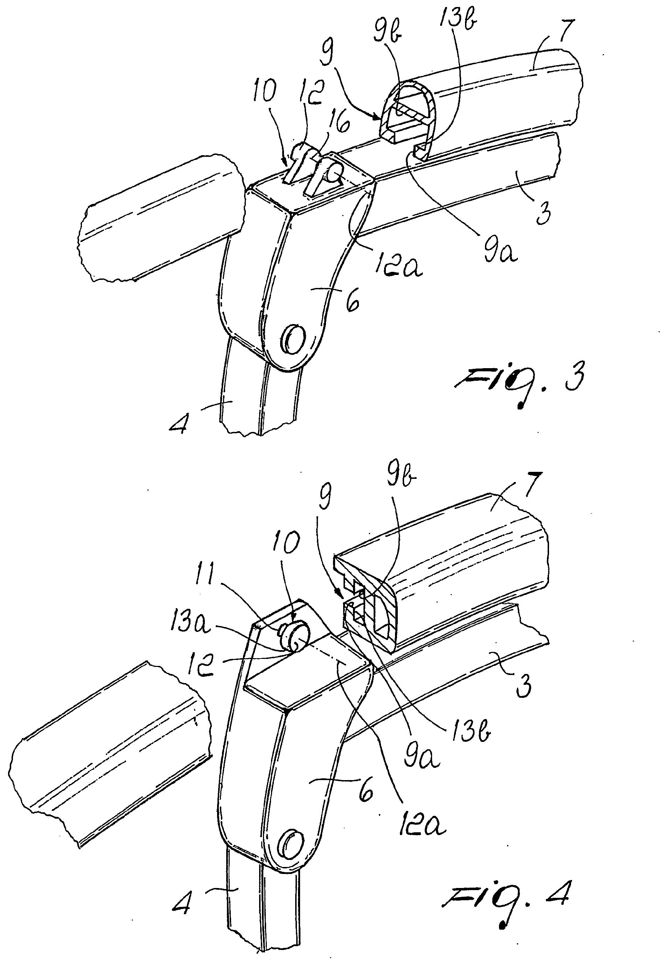

More particularly, as shown in Figure 4, it is possible for example for the head 12 to be constituted by a substantially circular body, which is supported so that it can rotate freely, about its own axis, by the protrusion 11 and is arranged so that its own axis lies substantially at right angles to the longitudinal direction of the coupling seat 9. In this manner, the head 12, by resting against the wall which delimits the wider portion 9b of the coupling seat 9, allows to achieve sliding with reduced friction between the corresponding upper upright 7 and the connecting element 10.

It is further possible to provide, laterally with respect to the protrusion, an abutment region 14, which is also formed on the articulation body 6 and on which the corresponding upper upright 7 can rest with one of its surfaces, having for example a flat configuration which is directed toward the corresponding front upright, when the frame 1 is in the extended condition.

As an alternative, the abutment region 14 is formed by a protrusion 15, which is adapted to enter the coupling seat 9 in the final step of the opening of the frame 1, in order to allow recovery of any coupling play between the connecting element 10 and the coupling seat 9.

Advantageously, the protrusion 11 can be crossed by a passage 16, which is constituted for example by a slot or a hole, for accommodating any actuation means (not shown), such as bars, cables or others, which act on removable locking means designed to keep the frame 1 locked in its extended position. It should be noted that the protrusion 11 can be divided in practice by the passage 16 into two separate portions, as shown in Figure 3.

In another embodiment, shown by way of example in Figure 8, for one or both upper uprights 7 there is an open guiding compartment 17, which is provided on the corresponding articulation body 6 and is delimited laterally by two protrusions 18, which support, on their mutually facing faces, respective connecting elements 10, which in turn engage respective coupling seats 9, which are formed, at mutually opposite sides, on the corresponding upper upright 7.

It should be added to the above that the frame 1 may furthermore be completed by a seat, if used as a stroller, or by a bassinet, if used as a baby carriage, said seat or bassinet being optionally associated detachably with the frame 1, in a per se known manner.

In practice it has been found that the frame according to the invention achieves the intended aim and objects, since thanks to the presence of the coupling seats and of the connecting elements the execution of the frame is extremely simplified.

Moreover, the invention allows to provide a frame for strollers, baby carriages or the like which conforms to current aesthetic requirements.

All the characteristics of the invention described above as advantageous, convenient or the like may also be omitted or be replaced with equivalents.

The individual characteristics presented with reference to general teachings or to particular embodiments may all be present in other embodiments or may replace characteristics in these embodiments.

The invention thus conceived is susceptible of numerous modifications and variations, all of which are within the scope of the appended claims.

In practice, the materials used, so long as they are compatible with the specific use, as well as the contingent shapes and dimensions, may be any according to requirements.

## Claims

1. A folding frame (1) particularly for strollers, baby carriages and the like, comprising a lower frame work (2), provided with two front uprights (3) and two rear uprights (4), which are connected, in a downward region, to respective wheels (5) and are mutually articulated by means of connecting assemblies, and two upper uprights (7), which can move, with respect to said lower frame work (2), for the passage of said frame (1) from an extended position to a retracted position and vice versa, **characterized in that** on at least one of said upper uprights (7) at least one coupling seat (9) is provided, which extends at least along a portion of the longitudinal extension of said at least one of said upper uprights (7), said at least one coupling seat (9) being engaged respectively by at least one connecting element (10), which is supported by said lower frame work (2), with the possibility of relative sliding of said at least one of said upper uprights (7) with respect to said at least one connecting element (10), said at least one of said upper uprights (7) engaging, with said at least one coupling seat (9), said at least one connecting element (10), with the possibility to rotate about said at least one connecting element (10).

2. The frame (1) according to claim 1, **characterized in that** said at least one of said upper uprights (7) can move with respect to said lower frame work (2) with a rotary motion component and with a translational motion component in the transition of said frame (1) from said extended position to said retracted position and vice versa.

3. The frame (1) according to one or more of the preceding claims, **characterized in that** said at least one connecting element (10) is mounted so that it can rotate on said lower frame work (2) about a pivoting axis which forms an axis for the rotation of said at least one of said upper uprights (7) in its movement for the transition of said frame (1) from said extended position to said retracted position and vice versa.

4. The frame (1) according to one or more of the preceding claims, **characterized in that** said at least one connecting element (10) comprises a protrusion (11) which protrudes from said lower frame work (2), said at least one coupling seat (9) comprising a groove-like portion (9a) which is open toward the outside and is adapted to accommodate said protrusion (11), retention means being provided which are adapted to prevent the disengagement of said protrusion (11) from said groove-like portion (9a).

5. The frame (1) according to one or more of the preceding claims, **characterized in that** said protrusion (11) has a wider head (12), which engages a corresponding wider portion (9b) of said at least one coupling seat (9), said head (12) forming at least one abutment region (13a), which can be engaged by a respective shoulder region (13b) which is formed by said wider portion (9b) of said at least one coupling seat (9).

6. The frame (1) according to one or more of the preceding claims, **characterized in that** said head (12) has, around its longitudinal direction, a lateral surface with a rounded contour, said at least one of said upper uprights (7) being able to rotate about an axis which is substantially parallel to said longitudinal direction of said head (12).

7. The frame (1) according to one or more of the preceding claims, **characterized in that** said head (12) has, in a transverse cross-section with respect to said longitudinal direction, a substantially circular shape.

8. The frame (1) according to one or more of the preceding claims, **characterized in that** said head (12) has a substantially elliptical transverse cross-section with respect to said longitudinal direction.

9. The frame (1) according to one or more of the preceding claims, **characterized in that** said connecting assemblies comprise articulation bodies (6) which join said front uprights (3) and said rear uprights (4), at their upper ends, said protrusion (11) being supported by the articulation body (6) proximate to said at least one of said upper uprights (7).

10. The frame (1) according to one or more of the preceding claims, **characterized in that** in said protrusion (11) there is a passage (16) for accommodating actuation means for devices for removably locking said frame (1) in said extended position.

11. The frame (1) according to one or more of the preceding claims, **characterized in that** it comprises friction reduction means, which are adapted to limit the sliding friction between said at least one connecting element (10) and said at least one of said upper uprights (7).

12. The frame (1) according to one or more of the preceding claims, **characterized in that** said head (12) comprises a substantially circular body, which is supported so that it can rotate freely about its own axis by said protrusion (11) and is arranged, with its own axis, substantially at right angles to the longitudinal direction of said at least one coupling seat (9), said head (12) engaging by contact the side wall of said wider portion (9b) of said coupling seat (9).

## Patentansprüche

1. Klapprahmen (1), insbesondere für Kindersportwagen, Kinderwagen und dergleichen, der ein unteres Rahmenwerk (2), das mit zwei vorderen Holmen (3) und zwei hinteren Holmen (4) versehen ist, die in einem unteren Bereich mit entsprechenden Rädern (5) verbunden sind und aneinander mittels Verbindungsanordnungen angelenkt sind, und zwei obere Holme (7), die sich in Bezug auf das untere Rahmenwerk (2) bewegen können, damit der Rahmen (1) aus einer ausgeklappten Stellung in eine eingeklappte Stellung und umgekehrt bewegt werden kann, umfasst, **dadurch gekennzeichnet, dass** an wenigstens einem der oberen Holme (7) wenigstens ein Kopplungssitz (9) vorgesehen ist, der sich wenigstens längs eines Abschnitts der Längserstreckung des wenigstens einen der oberen Holme (7) erstreckt, wobei der wenigstens eine Kopplungssitz (9) mit wenigstens einem entsprechenden Verbindungselement (10) in Eingriff ist, das durch das untere Rahmenwerk (2) unterstützt ist, wobei die Möglichkeit eines relativen Gleitens des wenigstens einen der oberen Holme (7) in Bezug auf das wenigstens eine Verbindungselement (10) besteht, wobei wenigstens einer der oberen Holme (7) mittels des wenigstens einen Kopplungssitzes (9) mit dem wenigstens einen Verbindungselement (10) in Eingriff ist, wobei die Möglichkeit besteht, dass er sich um das wenigstens eine Verbindungselement (10) dreht.

2. Rahmen (1) nach Anspruch 1, **dadurch gekennzeichnet, dass** sich der wenigstens eine der oberen Holme (7) in Bezug auf das untere Rahmenwerk (2) beim Übergang des Rahmens (1) von der ausgeklappten Stellung in die eingeklappte Stellung und umgekehrt mit einer Drehbewegungskomponente und mit einer Translationsbewegungskomponente bewegen kann.

3. Rahmen (1) nach einem oder mehreren der vorhergehenden Ansprüche, **dadurch gekennzeichnet, dass** das wenigstens eine Verbindungselement (10) so angebracht ist, dass es sich an dem unteren Rahmenwerk (2) um eine Schwenkachse drehen kann, die eine Achse für die Drehung des wenigstens einen der oberen Holme (7) bei seiner Bewegung für den Übergang des Rahmens (1) von der ausgeklappten Stellung in die eingeklappte Stellung und umgekehrt bildet.

4. Rahmen (1) nach einem oder mehreren der vorhergehenden Ansprüche, **dadurch gekennzeichnet, dass** das wenigstens eine Verbindungselement (10) einen Vorsprung (11) umfasst, der von dem unteren Rahmenwerk (2) vorsteht, wobei der wenigstens eine Kopplungssitz (9) einen nutförmigen Abschnitt (9a) umfasst, der zur Außenseite offen ist und dazu ausgelegt ist, den Vorsprung (11) aufzunehmen, wobei Rückhaltemittel vorgesehen sind, die dazu ausgelegt sind, die Lösung des Vorsprungs (11) von dem nutförmigen Abschnitt (9a) zu verhindern.

5. Rahmen (1) nach einem oder mehreren der vorhergehenden Ansprüche, **dadurch gekennzeichnet, dass** der Vorsprung (11) einen breiteren Kopf (12) besitzt, der mit einem entsprechenden breiteren Abschnitt (9b) des wenigstens einen Kopplungssitzes (9) in Eingriff ist, wobei der Kopf (12) wenigstens einen Anschlagbereich (13a) bildet, mit dem ein entsprechender Schulterbereich (13b), der durch den breiteren Abschnitt (9b) des wenigstens einen Kopplungssitzes (9) gebildet ist, in Eingriff gelangen kann.

6. Rahmen (1) nach einem oder mehreren der vorhergehenden Ansprüche, **dadurch gekennzeichnet, dass** der Kopf (12) um seine Längsrichtung eine seitliche Oberfläche mit einem abgerundeten Umriss aufweist, wobei sich der wenigstens eine der oberen Holme (7) um eine Achse drehen kann, die zu der Längsrichtung des Kopfes (12) im Wesentlichen parallel ist.

7. Rahmen (1) nach einem oder mehreren der vorhergehenden Ansprüche, **dadurch gekennzeichnet, dass** der Kopf (12) in einem Querschnitt in Bezug auf seine Längsrichtung im Wesentlichen kreisförmig ist.

8. Rahmen (1) nach einem oder mehreren der vorhergehenden Ansprüche, **dadurch gekennzeichnet, dass** der Kopf (12) einen im Wesentlichen elliptischen Querschnitt in Bezug auf seine Längsrichtung hat.

9. Rahmen (1) nach einem oder mehreren der vorhergehenden Ansprüche, **dadurch gekennzeichnet, dass** die Verbindungsanordnungen Gelenkkörper (6) umfassen, die die vorderen Holme (3) und die hinteren Holme (4) an ihren oberen Enden miteinander verbinden, wobei der Vorsprung (11) durch den Gelenkkörper (6) in der Nähe des wenigstens einen oberen Holms (7) unterstützt ist.

10. Rahmen (1) nach einem oder mehreren der vorhergehenden Ansprüche, **dadurch gekennzeichnet, dass** in dem Vorsprung (11) ein Durchlass (16) vorhanden ist, um Betätigungsmittel für Vorrichtungen aufzunehmen, um den Rahmen (1) in der ausgeklappten Stellung reversibel zu verriegeln.

11. Rahmen (1) nach einem oder mehreren der vorhergehenden Ansprüche, **dadurch gekennzeichnet, dass** er Reibungsreduzierungsmittel umfasst, die dazu ausgelegt sind, die Gleitreibung zwischen dem wenigstens einen Verbindungselement (10) und dem wenigstens einen der oberen Holme (7) zu begrenzen.

12. Rahmen (1) nach einem oder mehreren der vorhergehenden Ansprüche, **dadurch gekennzeichnet, dass** der Kopf (12) einen im Wesentlichen kreisförmigen Körper umfasst, der so unterstützt ist, dass er sich um seine eigene Achse durch den Vorsprung (11) frei drehen kann, und so angeordnet ist, dass seine eigene Achse zu der Längsrichtung des wenigstens einen Kopplungssitzes (9) im Wesentlichen senkrecht orientiert ist, wobei der Kopf (12) mit der Seitenwand des breiteren Abschnitts (9b) des Kopplungssitzes (9) durch Kontakt in Eingriff ist.

## Revendications

1. Cadre pliant (1), en particulier pour poussettes, landaus et similaires, comprenant une structure inférieure (2), équipée de deux montants avant (3) et de deux montants arrière (4) qui sont reliés, au niveau de leurs parties inférieures, à des roues respectives (5) et qui sont articulés les uns aux autres au moyen d'ensembles de liaison, ainsi que deux montants supérieurs (7) qui peuvent se déplacer par rapport à la structure inférieure (2) pour le passage dudit cadre (1) depuis une position déployée vers une position fermée et vice versa, **caractérisé en ce que** sur au moins un desdits montants supérieurs (7) est prévue une réception de jonction (9) au moins, qui s'étend au moins le long d'une portion de l'étendue longitudinale dudit au moins un montant supérieur (7), ladite au moins une réception de jonction (9) étant en prise respectivement avec au moins un élément de jonction (10), qui est porté par ladite structure inférieure (2), de façon à permettre un glissement relatif dudit au moins un montant supérieur (7) par rapport audit au moins un élément de jonction (10), ledit au moins un montant supérieur (7) entrant en prise grâce à ladite au moins une jonction (9), avec ledit au moins un élément de jonction (10), de façon à permettre la rotation autour dudit au moins un élément de jonction (10).

2. Cadre (1) suivant la revendication 1, **caractérisé en ce que** ledit au moins un montant supérieur (7) peut se déplacer par rapport à ladite structure inférieure (2) avec une composante de mouvement de rotation et une composante de mouvement de translation lors de la transition dudit cadre (1) depuis ladite position déployée vers ladite position fermée et vice versa.

3. Cadre (1) suivant une ou plusieurs des revendications précédentes, **caractérisé en ce que** ledit au moins un élément de jonction (10) est monté de façon qu'il puisse tourner sur ladite structure inférieure (2), autour d'un axe de pivotement, qui forme un axe pour la rotation dudit au moins un montant supérieur (7) au cours de son mouvement lors de la transition dudit cadre (1) depuis ladite position déployée vers ladite position fermée et vice versa.

4. Cadre (1) suivant une ou plusieurs des revendications précédentes, **caractérisé en ce que** ledit au moins un élément de jonction (10) comprend une partie en saillie (11) qui fait saillie depuis ladite structure inférieure (2), ladite au moins une réception de jonction (9) comprenant une portion en forme de rainure (9a), qui est ouverte vers l'extérieur et appropriée à recevoir ladite partie en saillie (11), des moyens de retenue appropriés à empêcher le dégagement de ladite partie en saillie (11) de ladite portion en forme de rainure (9a) étant prévus.

5. Cadre (1) suivant une ou plusieurs des revendications précédentes, **caractérisé en ce que** ladite partie en saillie (11) présente une tête plus large (12), qui entre en prise avec une portion plus large correspondante (9b) de ladite au moins une réception de jonction (9), ladite tête (12) formant au moins une zone de butée (13a) qui peut entrer en prise avec une zone d'épaulement (13b) respective, formée par ladite portion plus large (9b) de ladite au moins une réception de jonction (9).

6. Cadre (1) suivant une ou plusieurs des revendications précédentes, **caractérisé en ce qu'**autour de son sens longitudinal, ladite tête (12) présente une surface latérale avec un contour arrondi, ledit au moins un montant supérieur (7) pouvant tourner autour d'un axe qui est essentiellement parallèle audit sens longitudinal de ladite tête (12).

7. Cadre (1) suivant une ou plusieurs des revendications précédentes, **caractérisé en ce qu'**en coupe transversale par rapport audit sens longitudinal, ladite tête (12) présente une forme essentiellement circulaire.

8. Cadre (1) suivant une ou plusieurs des revendications précédentes, **caractérisé en ce que** ladite tête (12) présente une section transversale essentiellement elliptique par rapport audit sens longitudinal.

9. Cadre (1) suivant une ou plusieurs des revendications précédentes, **caractérisé en ce que** lesdits ensembles de liaison comprennent des corps d'articulation (6) reliant lesdits montants avant (3) et lesdits montants arrière (4) à leurs extrémités supérieures, ladite partie en saillie (11) étant portée par le corps d'articulation (6), de façon qu'elle soit proche dudit au moins un montant supérieur (7).

10. Cadre (1) suivant une ou plusieurs des revendications précédentes, **caractérisé en ce que** dans ladite partie en saillie (11) se trouve un passage (16) pour le logement de moyens d'actionnement de dispositifs de verrouillage dudit cadre (1) de façon amovible dans ladite position déployée.

11. Cadre (1) suivant une ou plusieurs des revendications précédentes, **caractérisé en ce qu'**il comprend des moyens diminuant la friction, qui sont appropriés à limiter la friction de glissement entre ledit au moins un élément de jonction (10) et ledit au moins un montant supérieur (7).

12. Cadre (1) suivant une ou plusieurs des revendications précédentes, **caractérisé en ce que** ladite tête (12) comprend un corps essentiellement circulaire qui est porté, de façon à pouvoir tourner librement autour de son propre axe, par ladite partie en saillie (11) et qui est, avec son propre axe, disposé essentiellement à angle droit par rapport au sens longitudinal de ladite au moins une réception de jonction (9), ladite tête (12) entrant en prise avec la paroi latérale de ladite portion plus large (9b) de ladite réception de jonction (9), de manière à être en contact avec celle-ci.
